# FASCICULE DE BREVET EUROPEEN

(11) **EP 2 436 289 B1**
(45) Date de publication et mention de la délivrance du brevet: **16.07.2014**
(21) Numéro de dépôt: 11306255.8
(22) Date de dépôt: 29.09.2011
(51) Int. Cl.: A47J 37/12, A47J 36/38, A47J 36/08

(54) **Appareil de cuisson électrique comportant un couvercle pivotant équipé d'un dispositif de récuperation des condensats**
Elektrisches Kochgerät mit einem schwenkbaren Deckel, der mit einer Vorrichtung zur Wiedergewinnung der Kondensate ausgestattet ist
Electrical cooking appliance comprising a hinged lid provided with a condensate-recovery device

(30) Priorité: 04.10.2010 FR 1058033
(43) Date de publication de la demande: 04.04.2012
(73) Titulaire: SEB S.A., 69130 Ecully (FR)
(72) Inventeur: Pontabry, Florent, 312017 Shaoxing City Zhejiang (CN); Seurat, Frédéric, 21490 Bretigny (FR)
(74) Mandataire: Cémeli, Eric Philippe Laurent

(56) Documents cités:
- EP-A1- 0 028 190
- EP-A1- 1 216 641

## Description

La présente invention concerne un appareil de cuisson électrique comportant un couvercle pivotant équipé d'un dispositif de récupération des condensats. Plus particulièrement l'invention concerne une mijoteuse électrique (« slow cooker » en anglais) équipée d'un tel dispositif.

Le document EP1216641 décrit un appareil de cuisson, en particulier une friteuse, comportant une enceinte de cuisson comprenant une cuve fermée par un couvercle monté pivotant, le couvercle comprenant une paroi intérieure inclinée vers une rigole lorsque le couvercle occupe une position abaissée fermant la cuve. La rigole est adjacente à la périphérie inférieure de la paroi intérieure du couvercle occupant une position relevée, et une ouverture ménagée dans la périphérie inférieure de la paroi intérieure communique par un passage avec un réservoir. Cette architecture nécessite une modification importante du couvercle de l'appareil.

Le but de l'invention est de proposer un dispositif d'évacuation des condensats très simple sans entrainer une modification importante de l'appareil.

Ce but est atteint par l'intermédiaire d'un appareil de cuisson électrique comportant un boitier formant une enceinte de cuisson comprenant une cuve fermée par un couvercle monté pivotant sur le boitier, le couvercle comprend un joint formant une goulotte caractérisé en ce que le joint comprend un conduit débouchant par une première extrémité dans la goulotte et par une deuxième extrémité au voisinage d'un réservoir à condensats lorsque le couvercle est en position relevée.

L'intégration de la fonction d'évacuation des condensats au joint du couvercle évite de modifier la structure générale du couvercle. Par ailleurs, cette architecture simplifiée permet d'évacuer rapidement les condensats, sans intervention supplémentaire de l'utilisateur.

Selon d'autres variantes de réalisation :
- l'appareil de cuisson comprend des moyens de fermeture du conduit lorsque le couvercle est en position abaissée.
- le réservoir est monté de façon amovible sur le boitier.
- les moyens de fermeture comprennent au moins une nervure sur le boitier et/ou sur le couvercle au niveau du conduit, la hauteur de la (des) nervure(s) est (sont) déterminée(s) pour que, lorsque le couvercle est en position abaissée, la distance entre la (les) nervure(s) et le boitier ou le couvercle soit inférieure au diamètre intérieur du conduit.
- le joint et le conduit forment une seule pièce,
- le conduit est placé au niveau de la charnière du couvercle,
- la première extrémité du conduit a une portion évasée,
- la section transversale du joint est de forme générale en V,
- l'appareil est une mijoteuse électrique.

D'autres particularités et avantages de la présente invention apparaîtront dans la description ci-après d'un mode de réalisation donné à titre d'exemple non limitatif et illustré par les dessins mis en annexe dans lesquels :

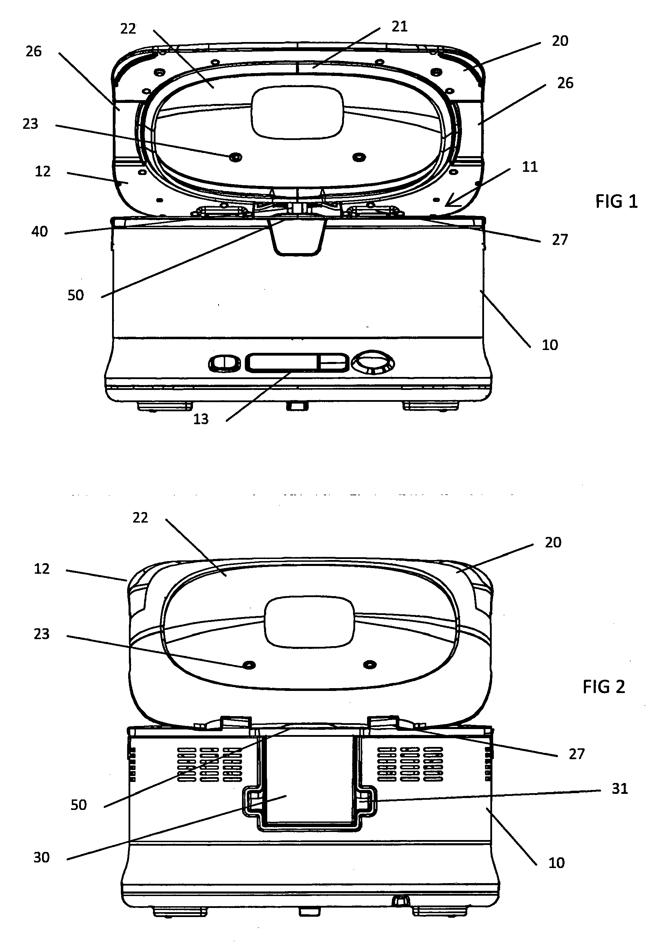

Les figures 1 et 2 sont respectivement des vues de face et de derrière d'un appareil de cuisson équipé d'un dispositif de récupération des condensats selon l'invention.
La figure 3 est une vue en perspective du joint du couvercle de l'appareil de cuisson.
La figure 4 est une vue en coupe selon le plan AA du joint représenté à la figure 3.

L'appareil de cuisson utilisé pour décrire la présente invention est une mijoteuse électrique (ou « slow cooker » en anglais). Cet appareil est destiné à réaliser des cuissons lentes et/ou des maintiens au chaud à des températures inférieures à 100°C. Toutefois l'invention peut facilement s'adapter à tout autre type d'appareil de cuisson électrique dans lesquels il est souhaitable d'évacuer les condensats générés lors de la cuisson des aliments.

Selon invention, l'appareil de cuisson électrique comprend un corps principal 10 ou boîtier comprenant un logement dans lequel est insérée une cuve 11 interne pour cuire les aliments. La forme du boitier 10 est par exemple sensiblement rectangulaire.

Le boitier est équipé d'un couvercle 12 monté articulé sur le boitier 10 de telle manière que la partie supérieure du corps principal 10 soit ouverte ou fermée par le couvercle 12. Un dispositif de commande 13 assurant les opérations de contrôle de l'appareil de cuisson équipe également le boitier 10.

L'appareil de cuisson comprend également au moins un capteur (non représenté) pour détecter la température à l'intérieur de la cuve interne. Les moyens de chauffage (non représentés) de l'appareil de cuisson comprennent un élément chauffant périphérique monté dans le boitier 10.

Le dispositif de commande 13 est installé sur la face avant du corps principal 10. Le dispositif de commande 13 comprend de façon connue en soi des boutons et/ou écran permettant à un utilisateur de sélectionner le mode de cuisson. Par exemple, l'utilisateur peut sélectionner une durée et la température de cuisson ou choisir parmi des programmes de cuisson préenregistrés.

Par ailleurs, le dispositif de commande 13 est connecté aux moyens de chauffage pour les activer ou les désactiver en fonction d'une part d'un programme de cuisson choisi par l'utilisateur et d'autre part des mesures de température relevées par le ou les capteurs.

Le boitier 10 ainsi que le couvercle sont par exemple en plastique.

Selon une variante de réalisation, un élément chauffant de type résistif forme une ceinture chauffante autour de l'enceinte de cuisson.

Le couvercle 12 comprend un bord périphérique 20 et une partie centrale 22 bombée. Le bord périphérique 20 est sensiblement plat pour venir sur le bord supérieur du boitier 10 lors que le couvercle 12 est en position abaissée. La partie centrale 22 est par exemple transparente de sorte que l'utilisateur puisse surveiller le déroulement de la cuisson. Le couvercle 12 peut comprendre également un ou plusieurs orifice 23 d'évacuation de la vapeur sous pression. Selon la variante de réalisation représentée, les orifices 23 sont pratiqués dans la partie centrale.

Le bord périphérique 20 du couvercle 12 peut comprendre des encoches 26 pour permettre aux poignées (non représentées) de la cuve interne 11 de s'emboiter dans le couvercle 12 et ainsi assurer la fermeture du boitier 10.

Le couvercle 12 comprend une charnière 27 assurant le pivotement du couvercle sur le boitier 10. La charnière 27 est située sur le bord supérieur du boitier 10 par exemple sur la partie arrière du boitier 10. Toutefois, la charnière 27 du couvercle peut également être installée sur l'un des côtés du boitier 10.

L'appareil de cuisson comprend également un réservoir 30 de récupération des condensats. Le réservoir 30 est, par exemple, monté dans un logement pratiqué dans le boitier 10 de l'appareil. Selon la variante représentée le réservoir 30 de récupération des condensats est amovible et positionné sensiblement au niveau de la charnière du couvercle 12. Le réservoir 30 est maintenu en place grâce à des ergots 31 qui viennent s'engager dans une encoche présente sur le boitier 10 de l'appareil. Le réservoir 30 comprend également un orifice supérieur par lequel sont introduits les condensats.

Il est possible d'envisager une autre variante dans laquelle le réservoir est intégré au boitier. Dans ce cas, la vidange du réservoir s'effectuerait par un deuxième orifice placé dans la partie basse du réservoir.

Le couvercle 12 comprend également, sur la paroi intérieure, un joint 21 assurant l'étanchéité de la fermeture entre le couvercle 12 et le boitier 10. Selon la variante de réalisation représentée, le joint 21 est fixé sur le couvercle 12 au niveau de la jonction entre le bord périphérique et la partie centrale.

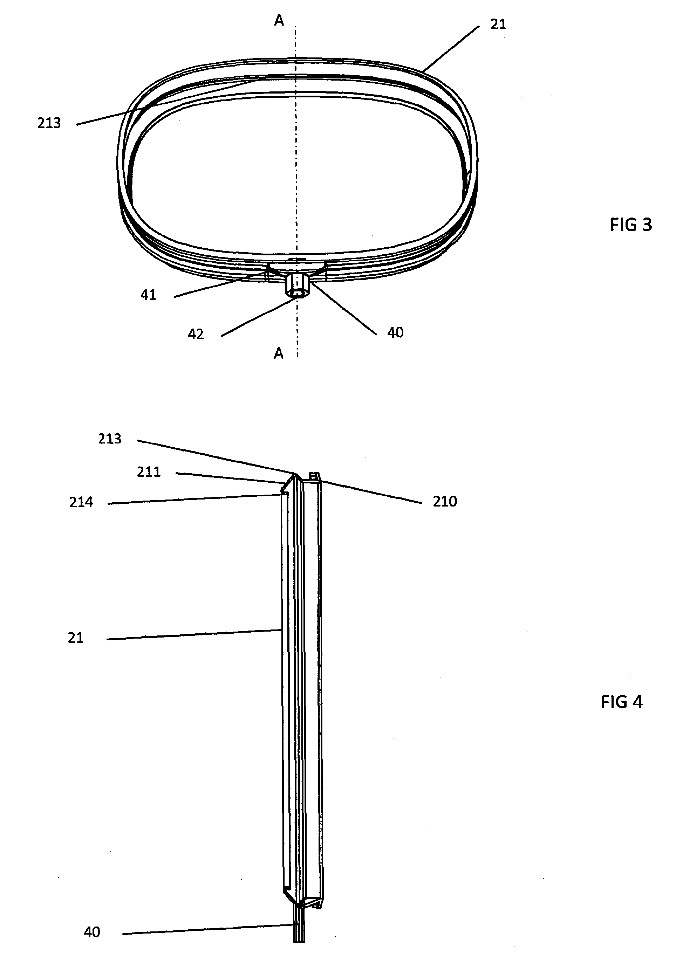

Le joint 21 va à présent être décrit en détail en référence aux figures 3 et 4. Selon l'invention, la section transversale du joint 21 forme une goulotte 213. Cette goulotte 213 permet de récupérer les condensats accumulés sur la partie centrale 22 du couvercle 12 lorsque celui-ci est passé de la position abaissée à la position relevée. A titre d'exemple, la forme générale de la section transversale du joint 21 est un V. Lorsque le couvercle est en positon abaissée, le segment inférieur 211 du V vient en appui sur le bord supérieur du boitier 10 pour réaliser l'étanchéité. Le segment supérieur du V comprend des moyens 210 de fixation sur le couvercle 12. Ces moyens de fixation comprennent une bordure 210 en forme de crochet qui s'engage dans une encoche correspondante présente sur le couvercle.

Le joint 21 comprend également un conduit 40. Une première extrémité 41 du conduit 40 débouche dans la goulotte 213. La deuxième extrémité 42 du conduit permet l'évacuation des condensats vers le réservoir 30. Pour ce faire, lorsque que le couvercle 12 est en position relevée, la deuxième extrémité débouche à proximité du réservoir 30 et plus précisément au voisinage de son orifice supérieur. En fait, le conduit 40 est de préférence placé dans la zone du joint située le plus bas et à proximité du réservoir lorsque le couvercle 12 est en position relevée.

Le segment inférieur de joint 21 comprend un rebord 214 formant une rigole. Le rebord 214 permet de retenir les condensats du couvercle 12 lorsque celui-ci est en position abaissée. Par ailleurs, lorsque le couvercle passe en position relevée, le rebord 214 permet d'empêcher les condensats situés dans la partie la plus élevée du couvercle 12 de retomber dans la cuve interne. Au contraire, les condensats sont orientés vers la goulotte 213 puis vers le conduit 40.

La première extrémité 41 du conduit 40 peut être de forme évasée pour faciliter le guidage des condensats dans le conduit 40. Le conduit 40 est sensiblement de forme tubulaire. Par ailleurs, le joint 21 et le conduit 40 peuvent être réalisés dans une même pièce par exemple en plastique. Toutefois, il est possible de réaliser le conduit 40 séparément. Le joint comprend alors un orifice au niveau du fond de la goulotte pour assurer une communication entre la goulotte et le conduit. L'assemblage entre le conduit et le joint peut être réalisé par collage ou emboitement ou tout autre moyen.

L'appareil comprend également des moyens de fermeture 50 du conduit 40 lorsque le couvercle est en position abaissée. En effet, il est souhaitable que lorsque le couvercle est fermé de la vapeur ne s'échappe pas au travers du conduit 40 mais seulement au travers des orifices 23 du couvercle 12 prévu à cet effet.

Les moyens de fermeture comprennent par exemple au moins une nervure 50 sur le boitier 10 et/ou sur le couvercle 12. La ou les nervure 50 sont placées au-dessus ou en-dessous du conduit 40 lorsque le couvercle 12 est en position abaissé. Lorsque le couvercle est abaissé, la ou les nervures 50 exercent un pincement sur le conduit 40. Ceci a pour effet d'empêcher la vapeur ou les éventuels condensats de s'échapper de l'appareil lorsque le couvercle 12 est abaissé. La hauteur des nervures 50 est donc déterminée pour que la distance entre le sommet de la nervure 50 et le couvercle ou le boitier 10 soit inférieure au diamètre intérieur du conduit 40.

Si une nervure 50 est mise en place à la fois sur le couvercle et le boitier la distance entre les deux nervures doit être inférieure au diamètre intérieur du conduit 40 et les deux nervures doivent être placées en face l'une de l'autre lorsque le couvercle 12 est abaissé.

Dans une autre variante, les moyens de fermeture comprennent une languette positionnée sur le boitier et venant boucher la deuxième extrémité 42 du conduit 40 lorsque le couvercle est rabattu.

Lors de la cuisson d'aliments dans l'appareil de cuisson selon l'invention, de la vapeur peut se condenser sur la partie centrale 22 du couvercle 12. Les condensats sont dans un premier temps recueillis dans la rigole 214 formée à l'extrémité libre du segment inférieur 211 du joint 21. Lorsque l'utilisateur ouvre le couvercle 12, la gravité provoque un ruissellement des condensats le long de la partie centrale 22 du couvercle 12 vers la goulotte 213 du joint 21. De même, les condensats recueillis dans la rigole 214 s'écoulent par gravité dans la goulotte 213 jusqu'à la première extrémité 41 du conduit 40.

Le conduit est dans la partie basse du joint 21 et lorsque le couvercle 12 est relevé les nervures 50 n'entravent pas l'écoulement des condensats dans le conduit 40. Ainsi, les condensats sont évacués vers le réservoir 30 au travers du conduit 40. Cette opération est très rapide (moins d'une seconde), et ne nécessite aucune intervention de la part de l'utilisateur.

L'invention permet donc d'éviter aux condensats de retomber dans la préparation alimentaire ou d'obliger l'utilisateur à prendre des précautions pour soulever le couvercle afin d'éviter aux condensats de couler dans la préparation ou sur le plan de travail.

## Revendications

1. Appareil de cuisson électrique comportant un boitier (10) formant une enceinte de cuisson comprenant une cuve fermée par un couvercle (12) monté pivotant sur le boitier (10), le couvercle (12) comprend un joint (21) formant une goulotte (213) **caractérisé en ce que** le joint (21) comprend un conduit (40) débouchant par une première extrémité (41) dans la goulotte (213) et par une deuxième extrémité (42) au voisinage d'un réservoir (30) à condensats lorsque le couvercle (12) est en position relevée.

2. Appareil de cuisson selon la revendication 1 **caractérisé en ce qu'**il comprend des moyens (50) de fermeture du conduit (40) lorsque le couvercle (12) est en position abaissée.

3. Appareil de cuisson selon la revendication 2 **caractérisé en ce que** les moyens (50) de fermeture comprennent au moins une nervure sur le boitier (10) et/ou sur le couvercle (12) au niveau du conduit (40), la hauteur de la (des) nervure(s) est (sont) déterminée(s) pour que, lorsque le couvercle (12) est en position abaissée, la distance entre la (les) nervure(s) et le boitier (10) ou le couvercle (12) soit inférieure au diamètre intérieur du conduit (40).

4. Appareil de cuisson selon l'une des revendications précédentes **caractérisé en ce que** le réservoir (30) est monté de façon amovible sur le boitier (10).

5. Appareil de cuisson selon l'une des revendications 1 à 4 **caractérisé en ce que** le joint (21) et le conduit (40) forment une seule pièce.

6. Appareil de cuisson selon l'une des revendications 1 à 5 **caractérisé en ce que** le conduit (40) est placé au niveau de la charnière (27) du couvercle (12).

7. Appareil de cuisson selon l'une des revendications 1 à 6 **caractérisé en ce que** la première extrémité (41) du conduit (40) a une portion évasée.

8. Appareil de cuisson selon l'une des revendications 1 à 7 **caractérisé en ce que** la section transversale du joint (21) est de forme générale en V.

9. Appareil de cuisson selon l'une des revendications 1 à 8 **caractérisé en ce que** l'appareil est une mijoteuse électrique.

## Patentansprüche

1. Elektrisches Kochgerät mit einem Gehäuse (10), das ein Kochgefäß mit einem Behälter bildet, der durch einen Deckel (12) geschlossen ist, welcher schwenkbar auf dem Gehäuse (10) angebracht ist, wobei der Deckel (12) eine Dichtung (21) umfasst, die eine Rinne (213) bildet, **dadurch gekennzeichnet, dass** die Dichtung (21) eine Leitung (40) enthält, die am einen Ende (41) in die Rinne (213) und am anderen Ende (42) in der Nähe eines Kondensatbehälters (30) mündet, wenn sich der Deckel (12) in angehobener Position befindet.

2. Kochgerät nach Anspruch 1, **dadurch gekennzeichnet, dass** es Vorrichtungen (50) zur Schließung der Leitung (40) umfasst, wenn sich der Deckel (12) in abgesenkter Position befindet.

3. Kochgerät nach Anspruch 2, **dadurch gekennzeichnet, dass** die Schließvorrichtungen (50) mindestens eine Rippe am Gehäuse (10) und/oder auf dem Deckel (12) in Höhe der Leitung (40) umfassen, wobei die Höhe der Rippe(n) sich daraus ergibt/ergeben, dass, wenn sich der Deckel (12) in abgesenkter Position befindet, der Abstand zwischen der/den Rippe(n) und dem Gehäuse (10) oder dem Deckel (12) geringer als der Innendurchmesser der Leitung (40) sein soll.

4. Kochgerät nach einem der vorhergehenden Ansprüche, **dadurch gekennzeichnet, dass** der Behälter (30) abnehmbar auf dem Gehäuse (10) angebracht ist.

5. Kochgerät nach einem der Ansprüche 1 bis 4, **dadurch gekennzeichnet, dass** die Dichtung (21) und die Leitung (40) ein einteiliges Stück bilden.

6. Kochgerät nach einem der Ansprüche 1 bis 5, **dadurch gekennzeichnet, dass** sich die Leitung (40) in Höhe des Scharniers (27) des Deckels (12) befindet.

7. Kochgerät nach einem der Ansprüche 1 bis 6, **dadurch gekennzeichnet, dass** das erste Ende (41) der Leitung (40) einen aufgeweiteten Teil aufweist.

8. Kochgerät nach einem der Ansprüche 1 bis 7, **dadurch gekennzeichnet, dass** der Querschnitt der Dichtung (21) eine allgemeine V-Form aufweist.

9. Kochgerät nach einem der Ansprüche 1 bis 8, **dadurch gekennzeichnet, dass** das Gerät ein elektrischer Schongarer ist.

## Claims

1. Electrical cooking appliance comprising a housing (10) forming a cooking chamber comprising a vessel closed by a lid (12) pivotally mounted on the housing (10), the lid (12) comprises a seal (21) forming a chute (213), **characterised in that** the seal (21) comprises a duct (40) opening at a first end (41) in the chute (213) and at a second end (42) adjacent to a condensate tank (30) when the lid (12) is in raised position.

2. Cooking appliance according to claim 1 **characterised in that** it comprises means (50) for closing the duct (40) when the lid (12) is in lowered position.

3. Cooking appliance according to claim 2 **characterised in that** the closing means (50) comprise at least one rib on the housing (10) and/or on the lid (12) at the duct (40), the height of the rib(s) is determined so that, when the lid (12) is in lowered position, the distance between the rib(s) and the housing (10) or the lid (12) is less than the inner diameter of the duct (40).

4. Cooking appliance according to one of the preceding claims **characterised in that** the tank (30) is removably mounted on the housing (10).

5. Cooking appliance according to one of claims 1 to 4 **characterised in that** the seal (21) and the duct (40) form a single part.

6. Cooking appliance according to one of claims 1 to 5 **characterised in that** the duct (40) is placed at the hinge (27) of the lid (12).

7. Cooking appliance according to one of claims 1 to 6 **characterised in that** the first end (41) of the duct (40) has a flared portion.

8. Cooking appliance according to one of claims 1 to 7 **characterised in that** the cross section of the seal (21) is generally V-shaped.

9. Cooking appliance according to one of claims 1 to 8 **characterised in that** the appliance is an electric slow cooker.
